# EUROPÄISCHE PATENTSCHRIFT

(11) **EP 0 936 439 B1**
(45) Veröffentlichungstag und Bekanntmachung des Hinweises auf die Patenterteilung: **12.11.2003**
(21) Anmeldenummer: 99102134.6
(22) Anmeldetag: 03.02.1999
(51) Int. Cl.: G01B 7/00, F16D 25/00, G01B 7/02, G01D 5/20, G01D 3/036

(54) **Induktiver Weg-Sensor**
Inductive displacement sensor
Capteur inductif de déplacement

(30) Priorität: 05.02.1998 DE 19804414
(43) Veröffentlichungstag der Anmeldung: 18.08.1999
(73) Patentinhaber: Micro-Epsilon Messtechnik GmbH & Co. Kommanditgesellschaft, D-94496 Ortenburg (DE)
(72) Erfinder: Wisspeinter, Karl, 94496 Ortenburg (DE); Mednikov, Felix Dr., 443096 Samara (RU)
(74) Vertreter: Naumann, Ulrich, Dr.-Ing.

(56) Entgegenhaltungen:
- EP-A- 0 366 227
- EP-A- 0 672 886
- WO-A-97/39312
- DE-A- 3 929 681
- DE-A- 4 107 101
- DE-A- 4 120 643

## Beschreibung

Die vorliegende Erfindung betrifft einen induktiven Weg-Sensor mit mindestens zwei um eine Drehachse konzentrisch und in Umfangsrichtung versetzt angeordneten Messspulen die an eine Auswertelektronik angeschlossen sind, einem Target, das konzentrisch zu der Drehachse und im Wesentlichen parallel zu der Drehachse relativ zu den Messspulen um einen Weg axial bewegbar ist, wobei durch die Bewegung des Targets in den Messspulen Messspannungen induziert werden, aus denen die Auswerteelektronik ein Messsignal ermittelt, das proportional zu dem zurückgelegten Weg des Targets ist.

Grundsätzlich handelt es sich hier um einen induktiven Weg-Sensor zur Bestimmung eines linearen Weges. Solche Weg-Sensoren sind seit langem bekannt und werden in großen Stückzahlen in beliebigen Anwendungsbereichen eingesetzt. In seiner Funktionsweise beruht der induktive Weg-Sensor auf dem Prinzip, dass wenn ein Target relativ zu einer Messspule des Weg-Sensors bewegt wird, in der Messspule eine Messspannung induziert wird, aus der in einer Auswerteelektronik dann ein dem zurückgelegten Weg proportionales Messsignal ermittelt wird. Voraussetzung für ein möglichst genaues Messsignal ist allerdings u.a., dass der Abstand des Targets zu der Messspule über den gesamten zurückgelegten Weg konstant ist und sich nicht aufgrund von Verkippung oder Exzentrität des Targets relativ zu der Messspule verändert. Würde sich der Abstand zwischen Target und Messspule verkleinern, vergrößerte sich die in der Messspule induzierte Messspannung und die Auswerteelektronik würde aus der fehlerbehafteten Messspannung einen scheinbar zurückgelegten Weg ermitteln, der größer wäre als der tatsächlich zurückgelegte Weg. Ebenso würde ein sich vergrößernder Abstand zwischen Target und Messspule dazu führen, dass die Auswerteelektronik einen scheinbar kleineren zurückgelegten Weg ermitteln als der tatsächlich zurückgelegte Weg.

Aus der Praxis sind bereits verschiedene induktive Weg-Sensoren bekannt. So wird beispielsweise im Kraftfahrzeugbereich die Stellung der Kupplung mittels eines in dem Nehmerzylinder (CSC - Concentric Slave Cylinder) der Kupplungsvorrichtung angeordneten induktiven Weg-Sensors ermittelt. Ein derartiger Weg-Sensor ist aus der DE 41 20 643 A1 bekannt. Bei dem dort offenbarten Weg-Sensor ist das Target an dem im Inneren des CSC axial verschiebbaren Kolben befestigt. An dem Gehäuse des CSC ist um das Target herum eine Messspule angeordnet. Wird nun die Kupplung gedrückt, bewegt sich der Kolben in dem CSC und mit ihm das Target relativ zu der Messspule um den Weg. Dadurch wird in der Messspule eine Messspannung induziert, aus der eine Auswerteelektronik den zurückgelegten Weg ermittelt. Derartige bekannte Weg-Sensoren haben jedoch den Nachteil, dass sie bei einer Exzentrität oder einer Verkippung des Kolbens in dem CSC, was zwangsläufig zu einer Veränderung des Abstands zwischen Target und Messspule führt, fehlerhafte Messsignale liefern.

Ein gattungsbildender Weg-Sensor ist aus der EP 0 672 886 A2 bekannt. Dort wird die Bewegung eines Targets in radialer und axialer Richtung gemessen. Das Target besteht aus einem ferromagnetische Platten umfassenden Rotor, wobei die Ausgestaltung der Platten je nach Einsatz des Weg-Sensors variieren. Zur Sicherstellung der Betriebstemperatur wird bei dem bekannten Weg-Sensor die Messung unterbrochen, wobei ein temperaturstabiler Widerstand vorgesehen ist, welcher zur Temperaturerfassung in Reihe mit Messspulenpaaren geschaltet wird. Der Widerstand ist der Auswerteschaltung zugeordnet und in einer Entfernung von den Messspulen angeordnet. Zur Messung der Temperatur wird der temperaturunabhängige Spannungsabfall am Widerstand mit dem Spannungsabfall an den Messspulenpaaren verglichen, wobei so auf die Betriebstemperatur geschlossen werden kann.

Bei dem aus der EP 0 672 886 bekannten Weg-Sensor ist insbesondere problematisch, dass lediglich eine Erfassung der Betriebstemperatur des Weg-Sensors erfolgt. Dies ist insbesondere dann problematisch, wenn der Weg-Sensor in Umgebungen eingesetzt wird, in denen er Temperaturschwankungen ausgesetzt ist, beispielsweise durch Erwärmung des Systems während des Betriebs, in welchem der Weg-Sensor arbeitet, da durch die Temperaturschwankungen die Messgenauigkeit des Weg-Sensors erheblich vermindert wird.

Aus der EP 0 366 227 A2 ist ebenfalls ein Weg-Sensor bekannt, bei dem eine Dummy-Spule vorgesehen ist, um die eine die Linearität der Messung stabilisierende Korrekturspule angeordnet ist. Die Dummy-Spule ist einem Messgehäuse zugeordnet, das von der Messspule entfernt angeordnet ist.

Der vorliegenden Erfindung liegt daher die Aufgabe zugrunde, einen induktiven Weg-Sensor derart auszugestalten und weiterzubilden, daß er den Einfluß von Temperaturschwankungen in dem Meßbereich, in dem der zunächgelegte lieg ermittelt werden soll, kompensiert und ein Meßsignal liefert, das frei von Meßfehlern aufgrund des Einflusses von Temperaturschwankungen ist.

Der erfindungsgemäße Weg-Sensor löst die voranstehende Aufgabe durch die Merkmale des Patentanspruchs 1. Danach ist der eingangs genannte induktive Weg-Sensor dadurch gekennzeichnet, dass der Sensor nach dem Wirbelstromprinzip arbeitet, dass zur Temperaturkompensation mehrere Kompensationsspulen um die Drehachse konzentrisch und in Umfangsrichtung versetzt angeordnet sind, die an die Auswerteelektronik angeschlossen sind, und dass das Target zylindermantelförmig ausgebildet ist, wobei die Drehachse die Längsachse des Zylindermantels des Targets darstellt, und auf den Außenseiten der Messspulen Abschirmschichten aufgebracht sind, auf denen von außen die Kompensationsspulen befestigt sind, so dass die Bewegung des Targets nahezu keine Spannungen in den Kompensationsspulen induziert.

Aufgrund der Kompensation der Messfehler durch Verkippung oder Exzentrität des Targets weist das Messsignal eine besonders hohe Genauigkeit auf und eignet sich insbesondere für den Einsatz in Anwendungsbereichen, bei denen es aufgrund von Vibrationen oder anderer äußerer Bewegungseinflüsse auf den Weg-Sensor zu einer Verkippung oder Exzentrität des Targets relativ zu der Drehachse kommen kann und bei denen es trotz dieser äußeren Bewegungseinflüsse auf eine sehr genaue Bestimmung des zurückgelegten Weges ankommt.

Zur Kompensation der Exzentrität und Verkippung des Targets werden mindestens zwei sich gegenüberliegende Messspulen benötigt. Die Kompensation wird immer besser, je mehr Spulen eingesetzt werden, z.B. drei um 120° versetzte oder vier um 90° versetzte Messspulen. Erhöht man die Anzahl der Messspulen gegen den theoretischen Wert unendlich, so erhält man eine einzige, den gesamten Umfang umfassende Messspule, wobei die Messfehler aufgrund der Verkippung und der Exzentrität des Targets nahezu vollständig kompensiert werden.

Das Target kann sich innerhalb der Messspulen im Wesentlichen parallel zu der Drehachse axial bewegen. Es ist aber auch denkbar, das Target außen und die Messspulen innerhalb des Targets anzuordnen.

Gemäß einer vorteilhaften Weiterbildung der Erfindung sind die Messspulen in Reihe geschaltet und mit zwei Widerständen und in einer Brückenschaltung zusammengeschaltet. Durch Abgleichen der beiden Halbbrücken mit den in Reihe geschalteten Messspulen einerseits und den zwei Widerständen und andererseits kann die Kompensation der Messfehler aufgrund von Verkippung und Exzentrität des Targets erfolgen.

Eine weitere Voraussetzung für ein möglichst genaues Messsignal ist außerdem, dass die Messung in einem relativ konstanten Temperaturbereich erfolgt. Zu hohe Temperaturschwankungen können zu einem fehlerbehafteten Messsignal führen, eine genaue Bestimmung des zurückgelegten Weges ist dann nicht mehr möglich.

Wie bereits zuvor erwähnt, sind konzentrisch um die Drehachse mehrere Kompensationsspulen angeordnet, die an die Auswerteelektronik angeschlossen sind. Durch diese Kompensationsspulen können in dem Messsignal Messfehler aufgrund des Einflusses von Temperaturschwankungen kompensiert werden.

Gemäß einer Weiterbildung der Erfindung wird vorgeschlagen, dass die Messspulen in Reihe zu einer ersten induktiven Halbbrücke geschaltet sind, dass die Kompensationsspulen in Reihe zu einer zweiten induktiven Halbbrücke geschaltet sind, dass an den Halbbrücken jeweils ein Rechteck-Signal anliegt, und dass die Messspulen-Halbbrücke und die Kompensationsspulen-Halbbrücke zu einer Induktivitäts-Messbrücke zusammengeschaltet sind.

Durch die Speisung der beiden Halbbrücken mit einem Rechteck-Signal wirken die Messspulen und die Kompensationsspulen als induktive Widerstände. Sowohl auf die Messspulen als auch auf die Kompensationsspulen wirkt die in dem Messbereich herrschende Temperatur und verändert die induktiven Widerstände sowohl der Messspulen als auch der Kompensationsspulen entsprechend. Durch die axiale Bewegung des Targets im Wesentlichen parallel zu der Drehachse werden nur in den Messspulen Messspannungen induziert, die die induktiven Widerstände nur der Messspulen verändern. Durch das Abgleichen der Induktivitäts-Messbrücke erfolgt dann die Kompensation der Temperatureinflüsse.

Es sei noch angemerkt, dass es mit einer solchen Anordnung auch möglich ist, Temperaturmessungen durchzuführen.

Bei der Kompensation der Temperatureinflüsse mit dem Weg-Sensor ist es besonders wichtig, dass die Abmessungen der Kompensationsspulen und der Abstand zwischen den Kompensationsspulen und dem Target so gewählt ist, dass die Bewegung des Targets relativ zu den Kompensationsspulen nahezu keine Spannungen in den Kompensationsspulen induziert. Eine derartige Auslegung des Weg-Sensors gewährleistet eine nahezu vollständige Kompensation der Temperatureinflüsse und ein besonders genaues Messsignal.

Gemäß einer vorteilhaften Weiterbildung der Erfindung wird vorgeschlagen, dass die Güte der Summe der Messspulen gleich der Güte der Summe der Kompensationsspulen ist.

Die Messspulen und/ oder die Kompensationsspulen sind auf einem zylindermantelförmigen Spulenträger angeordnet, wobei die Drehachse die Längsachse des Zylindermantels des Spulenträgers darstellt.

In der Praxis hat es sich als besonders vorteilhaft erwiesen, wenn die Spulenträger aus einem Keramiksubstrat bestehen. Die Spulenträger können starr oder aber auch als eine flexible Folie ausgebildet sein. Ein flexibler Spulenträger hat den Vorteil, dass er in nahezu beliebig ausgebildeten Messbereichen aufgebracht werden kann.

Um eine effiziente und kostengünstige Herstellung der Mess- und der Kompensationsspulen zu ermöglichen, hat es sich als besonders vorteilhaft erwiesen, wenn die Messspulen und die Kompensationsspulen auf den Spulenträgern aufgedruckt sind.

Des Weiteren ist das Target zylindermantelförmig ausgebildet, wobei die Drehachse die Längsachse des Zylindermantels des Targets darstellt. Das Target besteht vorteilhafterweise aus Aluminium.

In der Praxis hat sich eine besonders vorteilhafte Weiterbildung des erfindungsgemäßen Weg-Sensors bewährt, bei drei Messspulen in einem Winkel von 120° zueinander um die Drehachse konzentrisch angeordnet sind und drei Kompensationsspulen in einem Winkel von 120° zueinander ebenfalls um die Drehachse konzentrisch angeordnet sind. Die Messspulen und die Kompensationsspulen sind jeweils in einem gleichen Abstand zueinander abwechselnd um die Drehachse herum angeordnet, insbesondere sind die Messspulen um 60° gegenüber den Kompensationsspulen versetzt angeordnet. Um eine hohe Genauigkeit des erfindungsgemäßen Weg-Sensors sicherzustellen, sollte der Abstand zwischen den Messspulen und dem Target gleich groß sein wie der Abstand zwischen den Kompensationsspulen und dem Spulenträger der Messspulen.

Eine alternative besonders vorteilhafte Weiterbildung der Erfindung sieht vor, dass drei Messspulen in einem Winkel von 120° zueinander um die Drehachse konzentrisch angeordnet sind und drei Kompensationsspulen in einem Winkel von 120° zueinander ebenfalls um die Drehachse konzentrisch angeordnet sind. Auf den Außenseiten der Messspulen sind Abschirmschichten aufgebracht, auf denen von außen die Kompensationsspulen befestigt sind. Die Abschirmschichten bestehen vorteilhafterweise aus einem ferromagnetischen Material. Auf den Außenseiten der Kompensationsspulen sind Abschirmplatten aufgebracht, die vorteilhafterweise aus Aluminium bestehen. Um eine möglichst vollständige Temperaturkompensation zu ermöglichen, wird vorgeschlagen, dass die Abschirmplatten die gleiche Dicke aufweisen wie die Dicke des Zylindermantels des Targets. Darüber hinaus hat es sich als besonders vorteilhaft erwiesen, wenn die Abschirmplatten den gleichen Abstand zu den jeweils zugeordneten Kompensationsspulen aufweisen wie das zylindermantelförmige Target zu den Messspulen.

Gemäß einer vorteilhaften Weiterbildung der Erfindung wird vorgeschlagen, dass die Abmessung des Targets in axialer Richtung mindestens so groß ist wie der Messbereich des Weg-Sensors. Außerdem sind die Abmessungen der Messspulen in axialer Richtung mindestens so groß, dass sie das Target im Nullpunkt vollständig abschirmen. Wenn also die Abmessung des Targets in axialer Richtung genau so groß ist wie der Messbereich des Weg-Sensors, dann wird das Target im Nullpunkt vollständig von den Messspulen abgeschirmt, und liegt im Punkt der maximalen Auslenkung, bei einem maximalen zurückgelegten Weg des Targets also, gerade vollständig außerhalb der Messspulen.

Es hat sich gezeigt, dass der erfindungsgemäße Weg-Sensor für den Einsatz im Kraftfahrzeugbereich zur Bestimmung des Kupplungsweges besonders gut geeignet ist. Dazu sind die Messspulen an dem Gehäuse eines Nehmerzylinders (CSC - Concentric Slave Cylinder) einer Kupplungsvorrichtung für Kraftfahrzeuge angeordnet und das Target ist an dem axial bewegbaren Kolben des CSC befestigt. Gerade im Kraftfahrzeugbereich herrschen sehr raue Einsatzbedingungen, die hohe Anforderungen an die eingesetzten Sensoren stellen. So wirken beispielsweise starke Vibrationen auf den CSC, die zu Exzentrität und Verkippung des in dem CSC axial bewegbaren Kolbens führen können. Der erfindungsgemäße Weg-Sensor kann Messfehler aufgrund der Exzentrität und Verkippung des Kolbens problemlos kompensieren.

Außerdem treten im Bereich der Kupplungsvorrichtung sehr hohe Temperaturen auf, die ebenfalls zu großen Messfehlem führen können. Der erfindungsgemäße Weg-Sensor kann auch diese Messfehler aufgrund des Temperatureinflusses problemlos kompensieren. Dazu sind die Kompensationsspulen ebenfalls an dem Gehäuse des Nehmerzylinders (CSC - Concentric Slave Cylinder) der Kupplungsvorrichtung für Kraftfahrzeuge angeordnet.

Insgesamt liefert der erfindungsgemäße Weg-Sensor ein nahezu fehlerfreies Messsignal und erlaubt es, den zurückgelegten Kupplungsweg äußerst genau zu bestimmen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von drei Ausführungsbeispielen der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen des beanspruchten Weg-Sensors erläutert. In der Zeichnung zeigt:
- Fig. 1: einen erfindungsgemäßen Weg-Sensor in einer Ansicht im Längsschnitt in einer ersten Ausführungsform,
- Fig. 2: den erfindungsgemäßen Weg-Sensor gemäß der ersten Ausführungsform in einer Ansicht im Querschnitt entlang der Linie II-II aus Fig. 1,
- Fig. 3: eine Spulenanordnung mit Mess- und Kompensationsspule eines erfindungsgemäßen Weg-Sensors in einer Ausschnittsansicht im Querschnitt in einer zweiten Ausführungsform,
- Fig. 4: eine schematische elektronische Schaltung des erfindungsgernäßen Weg-Sensors gemäß der ersten und zweiten Ausfuhrungsform mit einer Kompensation der Temperatureinflüsse mittels Kompensationsspulen.
- Fig. 5: eine schematische elektronische Schaltung eines erfindungsgemäßen Weg-Sensors in einer dritten Ausführungsform mit einer Kompensation der Temperatureinflüsse mittels einer Konstantstromspeisung und
wobei in der Zeichnung
- U_{OUT} =: Ausgangsspannung des Weg-Sensors
- s =: zu ermittelnder Weg
- Δs =: Messbereich des Weg-Sensors
- a =: Exzentrität des Targets
- α =: Verkippung des Targets
- R₁, R₂, R₃ =: ohmsche Widerstände
- C₁, C₂ =: kapazitive Widerstände
- L₁, L₂, L₃ =: Messspulen des Weg-Sensors
- L₄, L₅, L₆ =: Kompensationsspulen des Weg-Sensors
bedeuten.

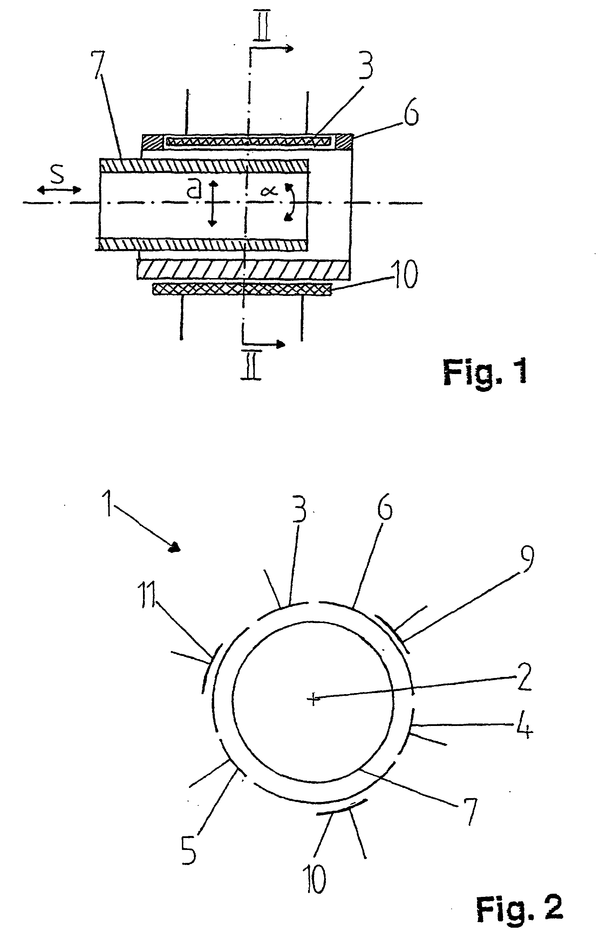

In den Fig. 1 und 2 ist eine erste Ausführungsform eines erfindungsgemäßen Weg-Sensors dargestellt, der in seiner Gesamtheit mit dem Bezugszeichen 1 gekennzeichnet ist. Der gesamte Weg-Sensor 1 ist in einem Nehmerzylinder (CSC - Concentric Slave Cylinder) einer Kupplungsvorrichtung eines Kraftfahrzeuges integriert. Der Weg-Sensor 1 weist drei um eine Drehachse 2 konzentrisch angeordnete Messspulen 3, 4, 5 auf. Die Messspulen 3, 4, 5 sind in dem feststehenden Gehäuse 6 des CSC integriert. Der Weg-Sensor 1 weist darüber hinaus ein Target 7 auf, das konzentrisch zu der Drehachse 2 und im Wesentlichen parallel zu der Drehachse 2 relativ zu den Messspulen 3, 4, 5 um einen Weg s axial bewegbar ist. Das Target 7 hat die Form eines Zylindermantels und ist an dem beweglichen Kolben des CSC befestigt.

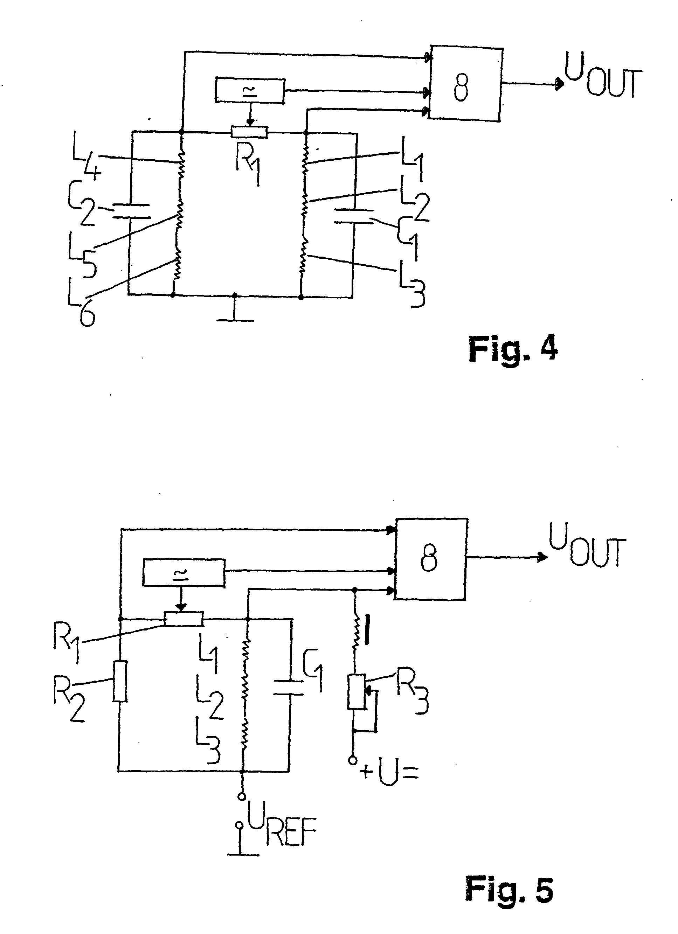

Die Messspulen 3, 4, 5 sind an eine Auswerteelektronik 8 (vgl. die Fig. 4, 5) angeschlossen. Durch die axiale Bewegung des Targets 7 werden in den Messspulen 3, 4, 5 Messspannungen induziert, aus denen die Auswerteelektronik 8 ein Messsignal U_{OUT} ermittelt, das proportional zu dem zurückgelegten Weg s des Targets 7 ist. Durch den Einsatz von drei Messspulen 3, 4, 5 können Messfehler in dem Messsignal U_{OUT} (vgl. die Fig. 4, 5) aufgrund von Verkippung α oder der Exzentrität a des Kolbens in dem CSC durch die Auswerteelektronik 8 problemlos kompensiert werden.

Um auch die Auswirkungen von innerhalb des CSC auftretenden Temperaturschwankungen auf das Messsignal kompensieren zu können, sind konzentrisch um die Drehachse 2 drei Kompensationsspulen 9, 10, 11 angeordnet, die ebenfalls an die Auswerteelektronik 8 angeschlossen sind. Die drei Messspulen 3, 4, 5 sind in einem Winkel von 120° zueinander um die Drehachse 2 konzentrisch angeordnet, und die drei Kompensationsspulen 9, 10, 11 sind in einem Winkel von 120° zueinander ebenfalls um die Drehachse konzentrisch angeordnet. Gemäß der in den Fig. 1 und 2 dargestellten ersten Ausführungsform sind die Messspulen 3, 4, 5 um 60° gegenüber den Kompensationsspulen 9, 10, 11 versetzt angeordnet. Der Abstand zwischen den Messspulen 3, 4, 5 und dem Target 7 ist gleich groß wie der Abstand zwischen den Kompensationsspulen 9, 10, 11 und dem Gehäuse 6 des CSC.

Die Abmessungen der Kompensationsspulen 9, 10, 11 und der Abstand zwischen den Kompensationsspulen 9, 10, 11 und dem Target 7 ist so gewählt, dass die Bewegung des Targets 7 relativ zu den Kompensationsspulen 9, 10, 11 nahezu keine Spannungen in den Kompensationsspulen 9, 10, 11 induziert. Außerdem sind die Mess- bzw. Kompensationsspulen 3, 4, 5 bzw. 9, 10, 11 so gewählt, dass die Güte der Summe der Messspulen 3, 4, 5 gleich der Güte der Summe der Kompensationsspulen 9, 10, 11 ist.

Gemäß Fig. 4 sind die Messspulen 3, 4, 5 in Reihe zu einer ersten induktiven Halbbrücke und die Kompensationsspulen 9, 10, 11 sind in Reihe zu einer zweiten induktiven Halbbrücke geschaltet. An beiden Halbbrücken liegt ein Rechteck-Signal an. Die Messspulen-Halbbrücke und die Kompensationsspulen-Halbbrücke sind zu einer Induktivitäts-Messbrücke zusammengeschaltet. Durch die Speisung der beiden Halbbrücken mit einem Rechteck-Signal wirken die Messspulen 3, 4, 5 und die Kompensationsspulen 9, 10, 11 als induktive Widerstände. Sowohl auf die Messspulen 3, 4, 5 als auch auf die Kompensationsspulen 9, 10, 11 wirkt die in dem Messbereich herrschende Temperatur und verändert die induktiven Widerstände sowohl der Messspulen 3, 4, 5 als auch der Kompensationsspulen 9, 10, 11 entsprechend. Durch die axiale Bewegung des Targets 7 im Wesentlichen parallel zu der Drehachse 2 werden nur in den Messspulen 3, 4, 5 Messspannungen induziert, die die induktiven Widerstände nur der Messspulen 3, 4, 5 verändern. Durch das Abgleichen der Induktivitäts-Messbrücke erfolgt dann die Kompensation der Temperatureinflüsse.

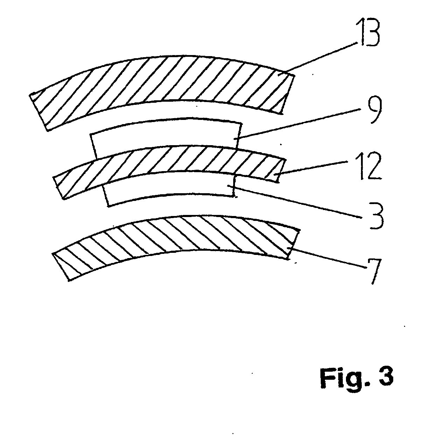

Gemäß einer zweiten Ausführungsform sind die drei Messspulen 3, 4, 5 und die drei Kompensationsspulen 9, 10, 11 zwar auch in einem Winkel von jeweils 120° zueinander um die Drehachse 2 konzentrisch angeordnet. Allerdings sind die Messspulen 3, 4, 5 nicht um einen Winkel von 60° zu den Kompensationsspulen 9, 10, 11 versetzt. Vielmehr sind die Messspulen 3, 4, 5 und die Kompensationsspulen 9, 10, 11 übereinander angeordnet. In Fig. 3 ist ein Ausschnitt einer Spulenanordnung mit Messspule 3 und Kompensationsspule 9 gemäß der zweiten Ausführungsform beispielhaft für alle anderen Spulenanordnungen 4, 10 bzw. 4, 11 dargestellt.

Auf den Außenseiten der Messspulen 3, 4, 5 sind Abschirmschichten 12 aufgebracht, auf denen von außen die Kompensationsspulen 9, 10, 11 befestigt sind. Die Abschirmschichten 12 bestehen aus einem ferromagnetischen Material. Auf den Außenseiten der Kompensationsspulen 9, 10, 11 sind Abschirmplatten 13 aufgebracht, die aus Aluminium bestehen. Die Abschirmplatten 13 weisen die gleiche Dicke auf wie die Dicke des Zylindermantels des Targets 7. Darüber hinaus weisen die Abschirmplatten 13 den gleichen Abstand zu den jeweils zugeordneten Kompensationsspulen 9, 10, 11 auf wie das zylindermantelförmige Target 7 zu den Messspulen 3, 4, 5.

Auch die Messspulen 3, 4, 5 und die Kompensationsspulen 9, 10, 11 des Weg-Sensors gemäß der zweiten Ausführungsform wie in Fig. 4 dargestellt zu induktiven Halbbrücken geschaltet, an denen ein Rechteck-Signal anliegt. Die Messspulen-Halbbrücke und die Kompensationsspulen-Halbbrücke sind zu einer Induktivitäts-Messbrücke zusammengeschaltet. Durch das Abgleichen der Induktivitäts-Messbrücke erfolgt dann die Kompensation der Temperatureinflüsse.

Gemäß einer in Fig. 5 als schematische elektrische Schaltung dargestellten dritten Ausführungsform des erfindungsgemäßen Weg-Sensors erfolgt die Kompensation der Temperatureffekt nicht mittels Kompensationsspulen, sondern über eine separate Konstantstromspeisung.

Im Übrigen wird auf die beschreibenden Bestandteile der Figuren 1 bis 5 verwiesen.

Abschließend sei ganz besonders hervorgehoben, dass das voranstehend lediglich beispielhaft erörterte Ausführungsbeispiel eines erfindungsgemäßen Verfahrens zur Erläuterung der beanspruchten Lehre dient, dieses jedoch nicht auf das rein willkürlich gewählte Ausführungsbeispiel einschränkt.

## Patentansprüche

1. Induktiver Weg-Sensor (1) mit
- mindestens zwei um eine Drehachse (2) konzentrisch und in Umfangsrichtung versetzt angeordneten Messspulen (3, 4, 5), die an eine Auswertelektronik (8) angeschlossen sind,
- einem Target (7), das konzentrisch zu der Drehachse (2) und im Wesentlichen parallel zu der Drehachse (2) relativ zu den Messspulen (3, 4, 5) um einen Weg s axial bewegbar ist, wobei durch die Bewegung des Targets (7) in den Messspulen (3, 4, 5) Messspannungen induziert werden, aus denen die Auswerteelektronik (8) ein Messsignal U_{OUT} ermittelt, das proportional zu dem zurückgelegten Weg s des Targets (7) ist,
**dadurch gekennzeichnet, dass**
- der Sensor nach dem Wirbelstromprinzip arbeitet und
- zur Temperaturkompensation mehrere Kompensationsspulen (9, 10, 11) um die Drehachse (2) konzentrisch und in Umfangsrichtung versetzt angeordnet sind, die an die Auswerteelektronik (8) angeschlossen sind, und
- das Target (7) zylindermantelförmig ausgebildet ist, wobei die Drehachse (2) die Längsachse des Zylindermantels des Targets darstellt (7), und auf den Außenseiten der Messspulen (3, 4, 5) Abschirmschichten (12) aufgebracht sind, auf denen von außen die Kompensationsspulen (9, 10, 11) befestigt sind, so dass die Bewegung des Targets (7) nahezu keine Spannungen in den Kompensationsspulen (9, 10, 11) induziert.

2. Induktiver Weg-Sensor (1) nach Anspruch 1, **dadurch gekennzeichnet, dass** die Messspulen (3, 4, 5) in Reihe geschaltet und mit zwei Widerständen R1 und R2 in einer Brückenschaltung zusammengeschaltet sind.

3. Induktiver Weg-Sensor (1) nach Anspruch 1 oder 2, **dadurch gekennzeichnet, dass** die Messspulen (3, 4, 5) in Reihe zu einer ersten induktiven Halbbrücke geschaltet sind, dass die Kompensationsspulen (9, 10, 11) in Reihe zu einer zweiten induktiven Halbbrücke geschaltet sind, dass an den Halbbrücken jeweils ein Rechteck-Signal anliegt, und dass die Messspulen-Halbbrücke und die Kompensationsspulen-Halbbrücke zu einer Induktivitäts-Messbrücke zusammengeschaltet sind.

4. Induktiver Weg-Sensor (1) nach einem der Ansprüche 1 bis 3, **dadurch gekennzeichnet, dass** die Abmessungen der Kompensationsspulen (9, 10, 11) und der Abstand zwischen den Kompensationsspulen (9, 10, 11) und dem Target (7) so gewählt ist, dass die Bewegung des Targets (7) relativ zu den Kompensationsspulen (9, 10, 11) nahezu keine Spannungen in den Kompensationsspulen (9, 10, 11) induziert.

5. Induktiver Weg-Sensor (1) nach Anspruch 4, **dadurch gekennzeichnet, dass** die Güte der Summe der Messspulen (3, 4, 5) gleich der Güte der Summe der Kompensationsspulen (9, 10, 11) ist.

6. Induktiver Weg-Sensor (1) nach einem der Ansprüche 1 bis 5, **dadurch gekennzeichnet, dass** die Messspulen (3, 4, 5) und/oder die Kompensationsspulen (9, 10, 11) auf einem zylindermantelförmigen Spulenträger angeordnet sind, wobei die Achse (2) die Längsachse des Zylindermantels des Spulenträgers darstellt.

7. Induktiver Weg-Sensor (1) nach einem der Ansprüche 1 bis 6, **dadurch gekennzeichnet, dass** das Target (7) zylindermantelförmig ausgebildet ist, wobei die Achse (2) die Längsachse des Zylindermantels des Targets (7) darstellt.

8. Induktiver Weg-Sensor (1) nach einem der Ansprüche 1 bis 7, **dadurch gekennzeichnet, dass** drei Messspulen (3, 4, 5) in einem Winkel von 120° zueinander um die Achse (2) konzentrisch in Umfangsrichtung versetzt angeordnet sind.

9. , Induktiver Weg-Sensor (1) nach einem der Ansprüche 1 bis 8, **dadurch gekennzeichnet, dass** drei Kompensationsspulen (9, 10, 11) in einem Winkel von 120° zueinander um die Achse (2) konzentrisch in Umfangsrichtung versetzt angeordnet sind.

10. Induktiver Weg-Sensor (1) nach einem der Ansprüche 1 bis 9, **dadurch gekennzeichnet, dass** die Messspulen (3, 4, 5) und die Kompensationsspulen (9, 10, 11) jeweils in dem gleichen Abstand zueinander abwechselnd um die Achse (2) konzentrisch in Umfangsrichtung versetzt angeordnet sind.

11. Induktiver Weg-Sensor (1) nach Anspruch 10, **dadurch gekennzeichnet, dass** die Messspulen (3, 4, 5) um 60° gegenüber den Kompensationsspulen (9, 10, 11) konzentrisch in Umfangsrichtung versetzt angeordnet sind.

12. Induktiver Weg-Sensor (1) nach einem der Ansprüche 6 bis 11, **dadurch gekennzeichnet, dass** der Abstand zwischen den Messspulen (3, 4, 5) und dem Target (7) gleich groß ist wie der Abstand zwischen den Kompensationsspulen (9, 10, 11) und dem Spulenträger der Messspulen (3, 4, 5).

13. Induktiver Weg-Sensor (1) nach einem der Ansprüche 7 bis 9, **dadurch gekennzeichnet, dass** auf den Außenseiten der Messspulen (3, 4, 5) Abschirmschichten (12) aufgebracht sind, auf denen von außen die Kompensationsspulen (9, 10, 11) befestigt sind.

14. Induktiver Weg-Sensor (1) nach Anspruch 13, **dadurch gekennzeichnet, dass** die Abschirmschichten (12) aus einem ferromagnetischen Material bestehen.

15. Induktiver Weg-Sensor (1) nach Anspruch 13 oder 14, **dadurch gekennzeichnet, dass** auf den Außenseiten der Kompensationsspulen (9, 10, 11) Abschirmplatten (13) aufgebracht sind.

16. Induktiver Weg-Sensor (1) nach Anspruch 15, **dadurch gekennzeichnet, dass** die Abschirmplatten (13) aus Aluminium bestehen.

17. Induktiver Weg-Sensor (1) nach Anspruch 7 und Anspruch 15 oder 16, **dadurch gekennzeichnet, dass** die Abschirmplatten (13) die gleiche Dicke aufweisen wie die Dicke des Zylindermantels des Targets (7).

18. Induktiver Weg-Sensor (1) nach Anspruch 7 und einem der Ansprüche 15 bis 17, **dadurch gekennzeichnet, dass** die Abschirmplatten (13) den gleichen Abstand zu den jeweils zugeordneten Kompensationsspulen (9, 10, 11) aufweisen wie das zylindermantelförmige Target (7) zu den Messspulen (3, 4, 5).

19. Induktiver Weg-Sensor (1) nach einem der Ansprüche 1 bis 18, **dadurch gekennzeichnet, dass** die Abmessung des Targets (7) in axialer Richtung mindestens so groß ist wie der Messbereich Δs des Weg-Sensors (1).

20. Induktiver Weg-Sensor (1) nach Anspruch 19, **dadurch gekennzeichnet, dass** die Abmessungen der Messspulen (3, 4, 5) in axialer Richtung mindestens so groß sind, dass sie das Target (7) im Nullpunkt vollständig abschirmen.

21. Induktiver Weg-Sensor (1) nach einem der Ansprüche 6 bis 20, **dadurch gekennzeichnet, dass** die Messspulen (3, 4, 5) und die Kompensationsspulen (9, 10, 11) auf den Spulenträger aufgedruckt sind.

22. Induktiver Weg-Sensor (1) nach einem der Ansprüche 6 bis 21, **dadurch gekennzeichnet, dass** der Spulenträger aus einem Keramiksubstrat besteht.

23. Induktiver Weg-Sensor (1) nach einem der Ansprüche 1 bis 22, **dadurch gekennzeichnet, dass** das Target (7) aus Aluminium besteht.

24. Induktiver Weg-Sensor (1) nach einem der Ansprüche 1 bis 23, **dadurch gekennzeichnet, dass** die Messspulen (3, 4, 5) an dem Gehäuse eines Nehmerzylinders (CSC - concentric slave cylinder) einer Kupplungsvorrichtung für Kraftfahrzeuge angeordnet sind und dass das Target (7) an dem axial bewegbaren Kolben des CSC befestigt ist.

25. Induktiver Weg-Sensor (1) nach einem der Ansprüche 1 bis 24, **dadurch gekennzeichnet, dass** die Kompensationsspulen (9, 10, 11) an dem Gehäuse des Nehmerzylinders (CSC - concentric slave cylinder) einer Kupplungsvorrichtung für Kraftfahrzeuge angeordnet sind.

## Claims

1. Inductive displacement sensor (1) having
- at least two measuring coils (3, 4, 5) arranged concentrically about a centre of rotation (2) and offset circumferentially, the measuring coils being connected to evaluating electronics (8),
- a target (7), which is axially movable relative to the measuring coils (3, 4, 5) by a distance s concentrically with respect to the centre of rotation (2) and substantially parallel to the centre of rotation (2), the movement of the target (7) inducing in the measuring coils (3, 4, 5) measuring voltages from which the evaluating electronics (8) determine a measuring signal U_{OUT} that is proportional to the distance s covered by the target (7),
**characterised in that**
- the sensor operates according to the eddy current principle and
- for temperature compensation a plurality of compensating coils (9, 10, 11) are arranged concentrically around the centre of rotation (2) and offset circumferentially and are connected to the evaluating electronics (8), and
- the target (7) is in the form of a cylinder envelope, the centre of rotation (2) representing the longitudinal axis of the cylinder envelope of the target (7), and on the outsides of the measuring coils (3, 4, 5) there are mounted shield layers (12) to which the compensating coils (9, 10, 11) are fixed from the outside, so that the movement of the target (7) induces virtually no voltages in the compensating coils (9, 10, 11).

2. Inductive displacement sensor (1) according to claim 1, **characterised in that** the measuring coils (3, 4, 5) are connected in series and are interconnected with two resistors R1 and R2 in a bridge circuit.

3. Inductive displacement sensor (1) according to claim 1 or 2, **characterised in that** the measuring coils (3, 4, 5) are connected in series with a first inductive half-bridge, **in that** the compensating coils (9, 10, 11) are connected in series with a second inductive half-bridge, **in that** a respective square-wave signal is applied to the half-bridges, and **in that** the measuring coil half-bridge and the compensating coil half-bridge are interconnected to form an inductance-measuring bridge.

4. Inductive displacement sensor (1) according to any one of claims 1 to 3, **characterised in that** the dimensions of the compensating coils (9, 10, 11) and the distance between the compensating coils (9, 10, 11) and the target (7) is selected so that the movement of the target (7) relative to the compensating coils (9, 10, 11) induces virtually no voltages in the compensating coils (9, 10, 11).

5. Inductive displacement sensor (1) according to claim 4, **characterised in that** the merit of the sum of the measuring coils (3, 4, 5) is equal to the merit of the sum of the compensating coils (9, 10, 11).

6. Inductive displacement sensor (1) according to any one of claims 1 to 5, **characterised in that** the measuring coils (3, 4, 5) and/or the compensating coils (9, 10, 11) are arranged on a coil carrier in the form of a cylinder envelope, the axis (2) representing the longitudinal axis of the cylinder envelope of the coil carrier.

7. Inductive displacement sensor (1) according to any one of claims 1 to 6, **characterised in that** the target (7) is in the form of a cylinder envelope, the axis (2) representing the longitudinal axis of the cylinder envelope of the target (7).

8. Inductive displacement sensor (1) according to any one of claims 1 to 7, **characterised in that** three measuring coils (3, 4, 5) are arranged at an angle of 120° with respect to one another concentrically around the axis (2) and offset circumferentially.

9. Inductive displacement sensor (1) according to any one of claims 1 to 8, **characterised in that** three compensating coils (9, 10, 11) are arranged at an angle of 120° with respect to one another concentrically around the axis (2) and offset circumferentially.

10. Inductive displacement sensor (1) according to any one of claims 1 to 9, **characterised in that** the measuring coils (3, 4, 5) and the compensating coils (9, 10, 11) are each arranged at the same distance from one another alternately concentrically around the axis (2) and offset circumferentially.

11. Inductive displacement sensor (1) according to claim 10, **characterised in that** the measuring coils (3, 4, 5) are arranged concentrically circumferentially offset through 60° with respect to the compensating coils (9, 10, 11).

12. Inductive displacement sensor (1) according to any one of claims 6 to 11, **characterised in that** the distance between the measuring coils (3, 4, 5) and the target (7) is the same magnitude as the distance between the compensating coils (9, 10, 11) and the coil carrier of the measuring coils (3, 4, 5).

13. Inductive displacement sensor (1) according to any one of claims 7 to 9, **characterised in that** mounted on the outsides of the measuring coils (3, 4, 5) are shield layers (12), to which the compensating coils (9, 10, 11) are fixed from the outside.

14. Inductive displacement sensor (1) according to claim 13, **characterised in that** the shield layers (12) consist of a ferromagnetic material.

15. Inductive displacement sensor (1) according to claim 13 or 14, **characterised in that** shield plates (13) are mounted on the outsides of the compensating coils (9, 10, 11).

16. Inductive displacement sensor (1) according to claim 15, **characterised in that** the shield plates (13) consist of aluminium.

17. Inductive displacement sensor (1) according to claim 7 and claim 15 or 16, **characterised in that** the shield plates (13) have the same thickness as the thickness of the cylinder envelope of the target (7).

18. Inductive displacement sensor (1) according to claim 7 and any one of claims 15 to 17, **characterised in that** the shield plates (13) are the same distance from the respective associated compensating coils (9, 10, 11) as the cylinder envelope-form target (7) is from the measuring coils (3, 4, 5).

19. Inductive displacement sensor (1) according to any one of claims 1 to 18, **characterised in that** the dimension of the target (7) in the axial direction is at least as large as the measuring range Δs of the displacement sensor (1).

20. Inductive displacement sensor (1) according to claim 19, **characterised in that** the dimensions of the measuring coils (3, 4, 5) in the axial direction are at least sufficiently large that they completely shield the target (7) at the zero point.

21. Inductive displacement sensor (1) according to any one of claims 6 to 20, **characterised in that** the measuring coils (3, 4, 5) and the compensating coils (9, 10, 11) are pressed onto the coil carrier.

22. Inductive displacement sensor (1) according to any one of claims 6 to 21, **characterised in that** the coil carrier consists of a ceramics substrate.

23. Inductive displacement sensor (1) according to any one of claims 1 to 22, **characterised in that** the target (7) consists of aluminium.

24. Inductive displacement sensor (1) according to any one of claims 1 to 23, **characterised in that** the measuring coils (3, 4, 5) are arranged on the housing of a slave cylinder (CSC - concentric slave cylinder) of a clutch device for motor vehicles and **in that** the target (7) is fixed to the axially movable piston of the CSC.

25. Inductive displacement sensor (1) according to any one of claims 1 to 24, **characterised in that** the compensating coils (9, 10, 11) are arranged on the housing of the slave cylinder (CSC - concentric slave cylinder) of a clutch device for motor vehicles.

## Revendications

1. Capteur inductif de déplacement (1) avec
- au moins deux bobines de mesure (3,4,5), disposées concentriquement autour d'un axe de rotation (2) et décalées en direction périphérique, qui sont raccordées à une électronique d'exploitation (8),
- une cible (7) qui est mobile axialement d'une course s concentriquement à l'axe de rotation (2) et essentiellement parallèlement à l'axe de rotation (2) par rapport aux bobines de mesure (3,4,5), le déplacement de la cible (7) induisant dans lés bobines de mesure (3,4,5) des tensions de mesure à partir desquelles l'électronique d'exploitation (8) détermine un signal de mesure U_{OUT} qui est proportionnel à la course s parcourue de la cible (7),
**caractérisé en ce que**
- le capteur travaille selon le principe des courants de Foucault et
- pour la compensation de température, plusieurs bobines de compensation (9,10, 11) sont disposées concentriquement autour de l'axe de rotation (2) et décalées en direction périphérique, lesquelles sont raccordées à l'électronique d'exploitation (8), et
- la cible (7) est conformée en forme d'enveloppe cylindrique, l'axe de rotation (2) représentant l'axe longitudinal de l'enveloppe cylindrique de la cible (7), et des couches de blindage (12) sont déposées sur les faces extérieures des bobines de mesure (3,4,5), sur lesquelles les bobines de compensation (9,10, 11) sont fixées depuis l'extérieur, de telle manière que le déplacement de la cible (7) n'induit approximativement pas de tensions dans les bobines de compensation (9,10, 11).

2. Capteur inductif de déplacement (1) selon la revendication 1,
**caractérisé en ce que** les bobines de mesure (3,4,5) sont connectées en série et sont interconnectées en un circuit pont avec deux résistances R1 et R2.

3. Capteur inductif de déplacement (1) selon la revendication 1 ou 2,
**caractérisé en ce que** les bobines de mesure (3,4,5) sont connectées en série en un premier demi-pont inductif, que les bobines de compensation (9, 10, 11) sont connectées en un second demi-pont inductif, qu'un signal carré est appliqué respectivement aux demi-ponts et que le demi-pont des bobines de mesure et le demi-pont des bobines de compensation sont interconnectés en un pont de mesure d'inductivité.

4. Capteur inductif de déplacement (1) selon l'une des revendications 1 à 3,
**caractérisé en ce que** les dimensions des bobines de compensation (9,10, 11) et la distance entre les bobines de compensation (9,10, 11) et la cible (7) sont choisies de telle manière que le déplacement de la cible (7) par rapport aux bobines de compensation (9,10, 11) n'induit approximativement pas de tensions dans les bobines de compensation (9, 10, 11).

5. Capteur inductif de déplacement (1) selon la revendication 4,
**caractérisé en ce que** le facteur de qualité de la somme des bobines de mesure (3,4,5) est égal au facteur de qualité de la somme des bobines de compensation (9, 10, 11).

6. Capteur inductif de déplacement (1) selon l'une des revendications 1 à 5,
**caractérisé en ce que** les bobines de mesure (3,4,5) et/ou les bobines de compensation (9,10, 11) sont disposées sur un support de bobines en forme d'enveloppe cylindrique, l'axe (2) représentant l'axe longitudinal de l'enveloppe cylindrique du support de bobines.

7. Capteur inductif de déplacement (1) selon l'une des revendications 1 à 6,
**caractérisé en ce que** la cible (7) est conformée en forme d'enveloppe cylindrique, l'axe (2) représentant l'axe longitudinal de l'enveloppe cylindrique de la cible (7).

8. Capteur inductif de déplacement (1) selon l'une des revendications 1 à 7,
**caractérisé en ce que** trois bobines de mesure (3,4,5) sont disposées décalées d'un angle de 120° les unes par rapport aux autres autour de l'axe (2) concentriquement en direction périphérique.

9. Capteur inductif de déplacement (1) selon l'une des revendications 1 à 8,
**caractérisé en ce que** trois bobines de compensation (9,10, 11) sont disposées décalées d'un angle de 120° les unes par rapport aux autres autour de l'axe (2) concentriquement en direction périphérique.

10. Capteur inductif de déplacement (1) selon l'une des revendications 1 à 9,
**caractérisé en ce que** les bobines de mesure (3,4,5) et les bobines de compensation (9, 10, 11) sont disposées décalées respectivement du même écartement les unes par rapport aux autres alternativement autour de l'axe (2) concentriquement en direction périphérique.

11. Capteur inductif de déplacement (1) selon la revendication 10,
**caractérisé en ce que** les bobines de mesure (3,4,5) sont disposées décalées de 60° par rapport aux bobines de compensation (9,10, 11) concentriquement en direction périphérique.

12. Capteur inductif de déplacement (1) selon l'une des revendications 6 à 11,
**caractérisé en ce que** la distance entre les bobines de mesure (3,4,5) et la cible (7) est égale à la distance entre les bobines de compensation (9,10, 11) et le support de bobines des bobines de mesure (3,4,5).

13. Capteur inductif de déplacement (1) selon l'une des revendications 7 à 9,
**caractérisé en ce que** des couches de blindage (12) sont déposées sur les faces extérieures des bobines de mesure (3,4,5), sur lesquelles les bobines de compensation (9,10, 11) sont fixées depuis l'extérieur.

14. Capteur inductif de déplacement (1) selon la revendication 13,
**caractérisé en ce que** les couches de blindage (12) sont constituées d'un matériau ferromagnétique.

15. Capteur inductif de déplacement (1) selon la revendication 13 ou 14,
**caractérisé en ce que** des plaques de blindage (13) sont déposées sur les faces extérieures des bobines de compensation (9, 10, 11).

16. Capteur inductif de déplacement (1) selon la revendication 15,
**caractérisé en ce que** les plaques de blindage (13) sont constituées d'aluminium.

17. Capteur inductif de déplacement (1) selon la revendication 7 et la revendication 15 ou 16,
**caractérisé en ce que** les plaques de blindage (13) présentent la même épaisseur que l'épaisseur de l'enveloppe cylindrique de la cible (7).

18. Capteur inductif de déplacement (1) selon la revendication 7 et l'une des revendication 15 à 17,
**caractérisé en ce que** les plaques de blindage (13) présentent la même distance aux bobines de compensation (9,10, 11) respectivement adjointes que la cible (7) en forme d'enveloppe cylindrique aux bobines de mesure (3,4,5).

19. Capteur inductif de déplacement (1) selon l'une des revendications 1 à 18,
**caractérisé en ce que** la dimension de la cible (7) en direction axiale est au moins aussi grande que la plage de mesure Δs du capteur de déplacement (1).

20. Capteur inductif de déplacement (1) selon la revendication 19,
**caractérisé en ce que** les dimensions des bobines de mesure (3,4,5) en direction axiale sont au moins assez grandes pour qu'elles protègent complètement la cible (7) au point zéro.

21. Capteur inductif de déplacement (1) selon l'une des revendications 6 à 20,
**caractérisé en ce que** les bobines de mesure (3,4,5) et les bobines de compensation (9,10, 11) sont emmanchées par pression sur le support de bobines.

22. Capteur inductif de déplacement (1) selon l'une des revendications 6 à 21,
**caractérisé en ce que** le support de bobines est constitué d'un substrat céramique.

23. Capteur inductif de déplacement (1) selon l'une des revendications 1 à 22,
**caractérisé en ce que** la cible (7) est constituée d'aluminium.

24. Capteur inductif de déplacement (1) selon l'une des revendications 1 à 23,
**caractérisé en ce que** les bobines de mesure (3,4,5) sont disposées sur le boîtier d'un cylindre récepteur (CSC-concentric slave cylinder) d'un dispositif d'accouplement pour véhicules automobiles et que la cible (7) est fixée au piston mobile axialement du CSC.

25. Capteur inductif de déplacement (1) selon l'une des revendications 1 à 24,
**caractérisé en ce que** les bobines de compensation (9,10, 11) sont disposées sur le boîtier d'un cylindre récepteur (CSC-concentric slave cylinder) d'un dispositif d'accouplement pour véhicules automobiles.
